Europäisches Patentamt

**European Patent Office**

Office européen des brevets

(19)

(11) Publication number: **0 099 751**

A1

# EUROPEAN PATENT APPLICATION

(12)

(21) Application number: **83304176.7**

(22) Date of filing: **19.07.83**

(51) Int. Cl.³: **F 16 K 17/10**
**F 16 K 31/383**

(30) Priority: **19.07.82 ZA 825120**

(43) Date of publication of application:
**01.02.84 Bulletin 84/5**

(84) Designated Contracting States:
**AT BE CH DE FR GB IT LI LU NL SE**

(71) Applicant: Bührman, Rudolph
27-9th Street, Linden
Johannesburg Transvaal Province(ZA)

(72) Inventor: Bührman, Rudolph
27-9th Street, Linden
Johannesburg Transvaal Province(ZA)

(74) Representative: Cheyne, John Robert Alexander
Mackenzie et al,
HASELTINE LAKE & CO. 28 Southampton Buildings
Chancery Lane
London WC2A 1AT(GB)

(54) **Hydraulic unloader valve.**

(57) A hydraulic unloader valve comprises a body (14) having an inlet (1), a delivery outlet (2) and a by-pass outlet (3). The inlet is connected to the by-pass outlet through a passage (22) which is generally closed by means of a control valve (20). The control valve is operated by a three way pilot (15,17) which is movable between two terminal positions. Upon commencement of a change of the state of the pilot valve from one terminal position to the other terminal position, the change of state is completed and the pressures at which the change of state commences from each of the terminal positions is appreciably different.

FIG.1

HYDRAULIC UNLOADER VALVE

FIELD OF THE INVENTION

THIS INVENTION relates to an hydraulic unloader valve for insertion in the pressure feed line to an hydraulically operated device.

BACKGROUND TO THE INVENTION

Most hydraulically operated devices require protection from unusually high pressures which could damage the devices. It is known to include a pressure relief or an unloader valve in the pressure fluid feed. Known relief valves used for this purpose have included a fluid passage which opens to drain when an unduly high pressure is sensed, in order to relieve the input above a given pressure to protect the device being operated or, indeed the pumping device itself. In the case of relief valves, both the pump and hydraulically operated device are relieved of pressure.

Unloader valves, on the other hand, lock the pressure in the delivery line whilst opening a passage that

/.....

allows the supply flow to escape to drain at low pressure. Unloader valves are generally complex and when used with low-viscosity fluids tend to be unreliable. They generally need accumulators in the delivery line to stabilize their operation.

Unloader valves now available for low viscosity fluids are of the direct acting type and it is a known problem that these valves revert to relief type of action, akin to that of a relief valve, under certain flow conditions, mainly when the flow demand on the delivery line changes slowly from nearly full flow or nearly zero flow

## SUMMARY OF THE INVENTION

In accordance with this invention there is provided a hydraulic unloader valve comprising a body having an inlet, a deliver outlet, and a by-pass outlet wherein the inlet and the by-pass outlet are connected by way of a fluid operated control valve, actuator means for the control valve being in communication by way of a three way pilot valve, selectively with the delivery outlet or the by-pass outlet according to the two terminal positions of the pilot valve, the pilot valve being such that upon commencement of a change of the state of said pilot valve from one terminal position to the other such change of state is completed and the pressures at which the change of state commences from each of the terminal positions is appreciably different.

Further features of the invention provided for the pilot valve to comprise two valve closure members movable in unison such that, in each of the two terminal positions, one closure member co-operates in sealing engagement with its associated valve seat; for said valve closure members to be movable in unison with a biased piston and cylinder assembly biased to a position in which the control valve is connected to the delivery outlet at pressures below a predetermined delivery pressure but for the fluid operated control valve actuator means to be connected to the by-pass outlet at delivery pressures in excess of a predetermined pressure; and, for a one way valve to be embodied between the inlet and the delivery outlet.

From the above it will be understood that the pilot valve is so constructed that it will move from one position to the next under such conditions that it will always require a higher force to initiate the movement from one state thereof than the force required to complete the movement. The pilot valve is of the three way configuration and can connect a pressure source to a hydraulically operated control valve to actuate the valve or can connect a hydraulically operated valve to a low pressure drain to de-activate the said valve selectively.

The hydraulically operated control valve could be of the normally closed or normally open type of pilot operated check valve. For use with low viscosity fluids, both the pilot and the control valve seats could be of the labyrinth plug type.

The fluid operated control valve is connected, together with a check valve, to the delivery line of a pump to allow the pump flow to be directed to the low pressure drain or to pass through the check valve into the delivery line of the unload valve from where it passes to the mechanism to be driven. The pilot valve is actuated from the pressure in this delivery line to operate the hydraulically operated control valve to open or close should the line pressure be high or low respectively.

## · BRIEF DESCRIPTION OF THE DRAWINGS

The invention will now be further described, by way of example, with reference to the accompanying drawings which show a cross-section through an unloader valve in accordance with the invention and in which:

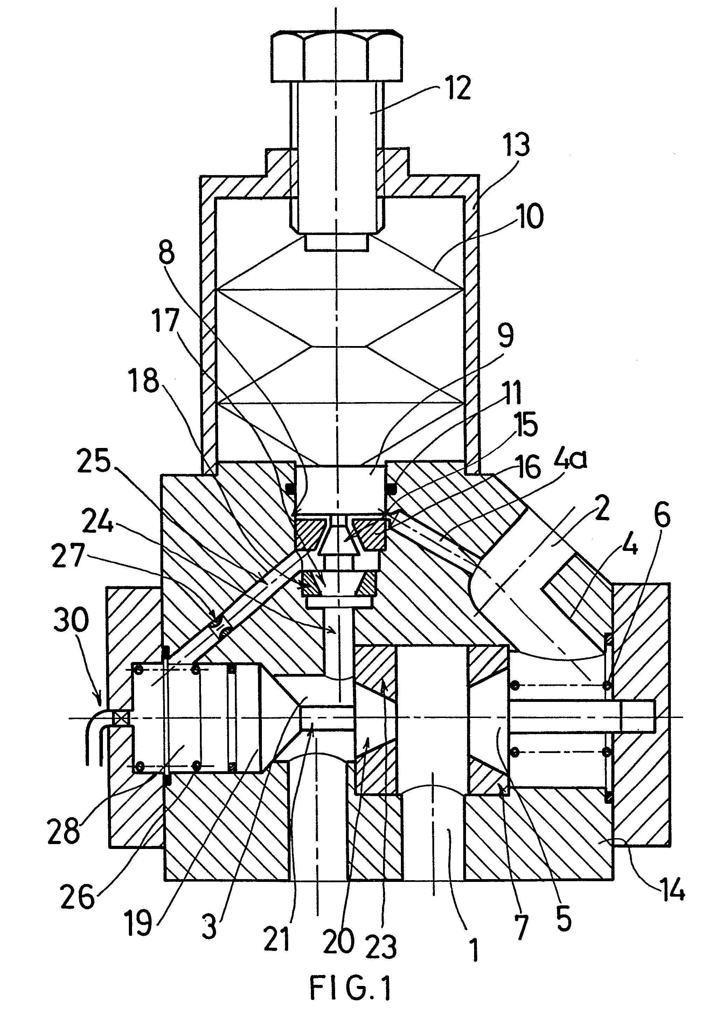

Figure 1 illustrates the control valve in a closed condition, and

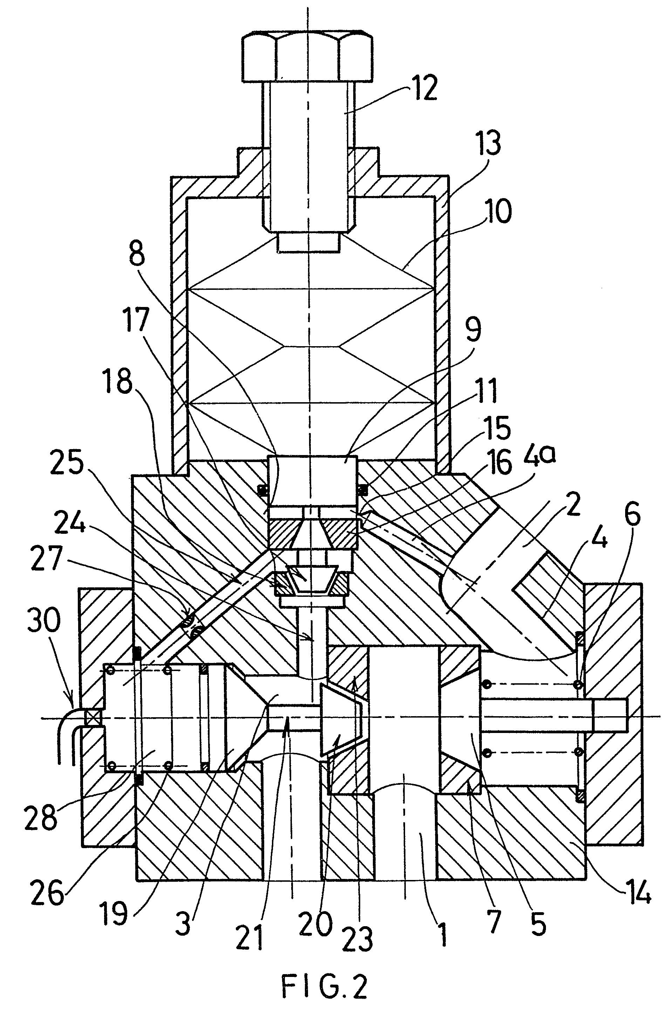

Figure 2 illustrates the control valve in an open condition.

## DETAILED DESCRIPTION WITH REFERENCE TO THE DRAWINGS

The unload valve shown in the drawing has a valve body 14 which includes an inlet 1 for connection to a source of fluid under pressure, a delivery outlet 2 for connection to an hydraulically operated device, and a return or by-pass outlet 3 for connection to a fluid storage tank. Between the inlet 1 and the delivery outlet 2, there is a passage 4 in which a check valve 5 is positioned. This check valve 5 controls flow into the passage 4 and is biased by a spring 6 against a co-operating seat 7.

When the fluid pressure in the inlet end of the passage 4 is above a certain level, the pressure will open the valve 5 to allow fluid to flow to the delivery outlet 2. This is the normal operating state of the valve.

The passage 4 also has a branch 4a communicating with a space 8 at one end of a axially movable plunger 9. The plunger 9 is biased inwardly towards the space 8 by a spring 10 and is sealed by a seal 11 to prevent fluid loss. The spring reacts on an adjustment bolt 12 and spring housing 13 which is attached to the valve body 14. The spring 10 may be replaced by other biasing means, and particularly envisaged is a pressure operated piston and cylinder assembly. This may be advantageous in some applications as the housing 13 would be smaller and the biasing means would be easier to control.

Attached to the plunger 9 is a first valve closure member 17 which co-operates with a first seat 18 when the spring forces the plunger down and a second valve closure 15 which would close against a second seat 16 should the plunger 9 be moved upwardly against the spring. The valve seats 16 and 18 could be a single element to ensure that when the second valve 15 is seated, the first valve 17 is unseated and vice versa. The area inside the seat edge diameter of the valve 17 is also larger than that of 15.

/.....

A passage 24 connects the first valve closure member 17 to drain into the by-pass outlet 3. From a position between the two valve seats 16 and 18 there is a fluid passage 25 leading to a space 28 behind a piston 19 in a bore in the body 14. This piston is operationally connected to a control valve 20 through its stem 21. This control valve 20 contols the flow from the inlet 1 to the by-pass outlet 3, a passage 22 through the valve being closed when the control valve 20 is seated against its seat 23.

In operation, fluid flow is provided into the inlet 1. If the pressure in the delivery outlet 2 and hence also the space 8 is low, the force of the spring 10 biasing the first and second valve closure members of the pilot valve will not be overcome and the first valve 17 will be seated and the second valve 15 will open the passage 25 to the delivery outlet 2. The control valve 20 will thus be seated on its seat 23. A bias spring 26 may be used to assist in closing the control valve 20 at least sufficiently to enable the check valve 5 to open at a lower pressure.

Should the pressure in the delivery outlet 2 rise so as to enable the plunger 9 to overcome the spring force, it will start to move and so open the first valve 17 and start to close the second valve 15. Because the second valve 15 now restricts the flow as it closes, and because valve 17 lifts off seat 18, the pressure between the valves will decrease and since the area of the first valve 17 is larger than the area of the second valve 15 the pressure reduction will assist in moving the plunger 9 against the spring action, thus achieving a condition where the motion of the plunger 9 cannot be stopped by a small increase in spring pressure. When the second valve 15 is closed the first valve 17 will be open to connect the passage 25 communicating with the bore in which the piston 19 is located to the by-pass outlet. The pressure in the inlet 1 will act on the control valve 20 and, because the pressure behind piston 19 is decreased the control valve 20 will open, thus allowing flow from the inlet through the passage 22 to the by-pass passage 3 and the spring biased check valve 5 will close against its seat 7.

Should the pressure in the delivery outlet reduce, then the hydraulic force on the plunger 9 will reduce and the spring 10 will overcome this force to push it down. This will unseat the second valve 15 and the first valve 17 will begin to seat. Flow past the first valve 17 to drain and past the second valve 15 to the bore will cause the pressure to reduce more and more between the valves and because the valves are of different area, the hydraulic force on the plunger will reduce. This reduction of force will be far greater than the reduction in spring force which will result from extension of the spring 10. Thus, once the valve 17 starts to move to a closed condition the valve will continue moving until closure is achieved.

The connection of the passage 25 between the pilot valve and the piston 19 to the delivery outlet will cause the control valve 20 to reseat and pump flow through the inlet 1 is then again directed to delivery outlet 2.

A control device indicated generally at numeral 30 provides an outlet from space 28 to drain. The control device 30 acts as an override to the pilot valve such that when in an open condition the pressure behind piston 19 decreases and the piston is more easily able to move against biasing spring 26. In so moving, valve 20 becomes unseated from seat 23 and fluid flows directly from the inlet 1 to bypass outlet 3.

/...

In the preferred embodiment the control device 30 will be operated by means of a temperature trandsducer which will be located at a convenient point in the fluid flow. Any unacceptable increase in temperature will cause the control device to open and hence, the fluid flowing through the unloaded valve will flow to drain through by-pass outlet 3. The strength of biasing springs 26 and 6 will be selected to allow the valve to operate in this manner. The control device 30 may be operated in other ways, and a manually operated device or a pressure operated device linked to another point in the overall system may also be used.

Any of the valve seats 7, 16, 18, or 23 may be of the labyrinth plug type which have specific advantages in some applications.

The above description is of the valve as it could be built to have the control valve 20 in the normally open mode. By reversing the first and second valves 15 and 17 in size and direction by seating the valve could also be built to operate in the normally closed mode.

WHAT IS CLAIMED IS

1. A hydraulic unloader valve comprising a body having an inlet, a delivery outlet, and a by-pass outlet wherein the inlet and the by-pass outlet are connected by way of a fluid operated control valve, actuator means for the control valve being in communication by way of a three way pilot valve, selectively with the delivery outlet or the by-pass outlet according to the two terminal positions of the pilot valve, the pilot valve being such that upon commencement of a change of the state of said pilot valve from one terminal position to the other such change of state is completed and the pressures at which the change of state commences from each of the terminal positions is appreciably different.

2. A hydraulic unloader valve as claimed in Claim 1 wherein the pilot valve comprises two valve closure members movable in unison such that , in each of the two terminal positions, one closure member co-operates in sealing engagement

/...

with its associated valve seat.

3.     A hydraulic unloader valve as claimed in Claim 2
       wherein said valve closure members are movable in
       unison with a biased piston and cylinder assembly
       biased to a position in which the control valve
       is connected to the delivery outlet at pressures
       below a predetermined delivery pressure but for
       the fluid operated control valve actuator means
       to be connected to the by-pass outlet at delivery
       pressures in excess of a predetermined pressure.

4.     A hydraulic unloader valve as claimed in Claim 1
       wherein a one way valve is located between the
       inlet and delivery outlet.

5.     A hydraulic unloader valve as claimed in Claim 1
       wherein the pilot and control valve seats are of
       the labyrinth plug type.

6.     A hydraulic unloader valve as claimed in Claim 1
       wherein the control valve has an independantly
       operated control device associated therewith
       adapted to cause said control valve to move to a position wherein fluid flowing through the body flows to the by-pass outlet independently of the position of the pilot valve.

7.   A hydraulic unloader valve as claimed in Claim 6 wherein the control device is controlled through a temperature transducer.

8.   A hydraulic unloader valve as claimed in Claim 1 wherein the fluid operated control valve is connected through a valve stem to a piston and cylinder assembly, the pilot valve selectively controlling pressure on the piston to operate said control valve, a control device adapted to selectively override the pilot valve control by causing a decrease in pressure on the piston thereby enabling fluid flowing in the unloader valve to flow through the by-pass outlet.

9.   A hydraulic unloader valve substantially as hereinbefore described with reference to and as illustrated in the accompanying drawings.

FIG.1

FIG.2

**European Patent Office**

**EUROPEAN SEARCH REPORT**

Application number

EP 83 30 4176

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 172 466 (TARGET ROCK CORP.) * Column 3, lines 1-44; column 4, lines 19-64 * | 1-3 | F 16 K 17/10 F 16 K 31/388 |
| X | US-A-3 414 008 (ANDERSON, GREENWOOD & CO.) * Claim 5; column 3, line 33 - column 4, line 69 * | 1-3 | |
| A | GB-A-1 266 512 (ANDERSON, GREENWOOD & CO.) | | |

TECHNICAL FIELDS SEARCHED (Int. Cl. ³)

F 16 K 17/00
F 16 K 31/00

The present search report has been drawn up for all claims

| Place of search THE HAGUE | Date of completion of the search 20-10-1983 | Examiner DE SMET F.P. |
|---|---|---|